Europäisches Patentamt

European Patent Office

Office européen des brevets

(11) Numéro de publication: **0 365 452**

**A1**

(12) # DEMANDE DE BREVET EUROPEEN

(21) Numéro de dépôt: **89460032.9**

(51) Int. Cl.5: **A22C 17/02**

(22) Date de dépôt: **10.10.89**

(30) Priorité: **18.10.88 FR 8814074**

(43) Date de publication de la demande:
**25.04.90 Bulletin 90/17**

(84) Etats contractants désignés:
**BE DE ES GB IT NL**

(71) Demandeur: **CENTRE NATIONAL DU MACHINISME AGRICOLE, DU GENIE RURAL, DES EAUX ET DES FORETS (CEMAGREF)**
**Parc de Tourvoie**
**F-92160 Antony(FR)**

Demandeur: **COUEDIC-MADORE**
**Z.A de Kerbusson Saint-Barnabe**
**F-22600 Loudeac(FR)**

(72) Inventeur: **Couedic, Bernard**
**24, rue Saint-Eloi**
**F-22600 Loudeac(FR)**
Inventeur: **Dupit, Jacques**
**6, avenue des Cités Unies**
**F-63200 Riom(FR)**
Inventeur: **Le Maux, Robert**
**3, impasse Descartes**
**F-22600 Loudeac(FR)**
Inventeur: **Mounin, Marc**
**Le Bois de l'Eau Espinasse-Vozelle**
**F-03110 Escurolles(FR)**

(74) Mandataire: **Martin, Jean-Jacques et al**
**Cabinet REGIMBEAU 11, rue Franz Heller**
**Centre d'Affaires Patton B.P. 19107**
**F-35019 Rennes Cédex(FR)**

(54) **Procédé et dispositif de maintien d'une pièce de viande au cours de son désossage.**

(57) Selon l'invention, la pièce de viande de boucherie telle qu'une demi-carcasse ou un quartier avant est désossée "en suspendu", des organes de bridage 41, 41' placés à l'intérieur de sa cavité thoracique assurant l'immobilisation de la pièce de viande au cours du désossage.

FIG.7

## PROCEDE ET DISPOSITIF DE MAINTIEN D'UNE PIECE DE VIANDE AU COURS DE SON DESOSSAGE

La présente invention concerne un procédé et un dispositif de maintien d'une pièce de viande au cours de son désossage.

Elle concerne plus précisément un procédé et une dispositif de maintien utilisable pour le désossage d'une grosse pièce de viande de boucherie brute selon la technique de désossage dite "en suspendu".

Par pièce de viande de boucherie brute, on entendra dans toute la description et les revendications ci-après une grosse pièce de viande destinée à être détaillée en vue de la consommation, dont la chair et les os n'ont pas encore été séparés ; il peut s'agir en particulier d'une demi-carcasse ou d'un quartier avant, notamment de boeuf, de veau, de porc, d'ovin etc.

Traditionnellement, le désossage est effectué sur table. Il concerne des quartiers ou des pièces de viande préalablement réfrigérés à 7°C à coeur. Récemment, il a été proposé d'effectuer ce désossage précocement avant réfrigération, soit entre 4 et 6 heures post mortem.

Il a déjà été également proposé une technique industrielle de désossage selon laquelle la pièce de viande passe successivement dans différents postes de travail où sont découpés et prélevés les uns après les autres les différents morceaux en vue de leur conditionnement et de leur vente ultérieure. Selon un procédé connu, la pièce de viande reste "suspendue" à un crochet durant toute l'opération ; elle est acheminée de poste en poste par un convoyeur aérien, ce qui présente des avantages intéressants, notamment sur le plan de l'hygiène et de la productivité.

A chacun des postes de travail, un opérateur professionnel effectue manuellement, au couteau, une certaine tâche c'est-à-dire un désossage partiel par enlèvement de certains morceaux bien définis. La pièce de viande se trouve suspendue devant l'opéra teur, dans une position sensiblement verticale. La plupart des opérations de désossage qui doivent être faites dans un poste de travail, par un opérateur déterminé, sont en fait une suite d'opérations distinctes incluant un traçage, le dégagement et la levée du morceau concerné. Au cours de ce travail, il est souvent nécessaire d'immobiliser fermement la pièce de viande, au moins au niveau où la pièce est sujette à l'opération. Les moyens d'immobilisation doivent assurer une retenue efficace de la pièce de viande, sans l'endommager et naturellement sans abîmer les morceaux voisins qui seront prélevés ultérieurement. Ces moyens doivent pouvoir être actionnés facilement et rapidement par l'opérateur, de façon à ne pas ralentir la cadence de production ; ils doivent aussi pouvoir être escamotés facilement pour ne pas gêner les autres opérations, et pour autoriser le passage des différentes pièces de viande au poste de travail.

Ces problèmes se posent en particulier pour le désossage de l'épaule d'un gros bovin pour lequel la pièce brute est une demi-carcasse ou un quartier avant, désossage qui comprend la levée du paleron et de la macreuse ainsi que la levée de l'omoplate, et qui exige une immobilisation particulièrement ferme et stable de la demi-carcasse ou du quartier au niveau du thorax.

A la connaissance du déposant, il n'existe pas dans l'état de la technique de procédé ni de dispositif répondant aux différents impératifs qui viennent d'être cités, et l'objet principal de la présente invention est de combler cette lacune.

Un autre objectif de l'invention est de proposer une technique d'assistance mécanique au désossage qui, combinée avec la technique de bridage selon l'invention, facilite très sensiblement l'opération de désossage de l'épaule dans l'application qui a plus particulièrement été évoquée plus haut.

A cet effet, le procédé de maintien selon l'invention est caractérisé en ce qu'on bride la pièce de viande - sensiblement au même niveau que celui où s'effectue le désossage - contre un support fixe, au moyen d'organes de bridage qui sont placés à l'intérieur de la cavité thoracique de la pièce de viande, ces organes s'appliquant avec un certain serrage contre la paroi interne de cette cavité thoracique.

De préférence, lesdits organes de bridage viennent s'appliquer d'une part dans la région de la jonction des vertèbres dorsales avec les côtes, et d'autre part dans la zone cartilagineuse qui relie les côtes au sternum, en y pénétrant.

Lorsque le procédé est appliqué au désossage de l'épaule d'un gros bovin, ce désossage - qui se fait manuellement à l'aide d'un couteau - est avantageusement assisté mécaniquement au moyen d'une pince qui exerce des tractions successivement sur l'ensemble paleron-macreuse et sur l'omoplate dans ce cas, le quartier de gros bovin étant suspendu à sa partie arrière, et maintenu sensiblement en position verticale, les tractions mécaniques sont de préférence exercées du côté opposé à celui du membre avant, selon une ligne de force qui est dirigée d'une part vers le haut en formant un angle de l'ordre de 30° avec l'horizontale, d'autre part vers l'extérieur en formant un angle de l'ordre de 20° avec le plan vertical général contenant la demi-carcasse ou le quartier.

Le dispositif servant à mettre en oeuvre ce procédé, qui fait également l'objet de l'invention, est caractérisé par le fait qu'il comporte un support en forme de châssis allongé, sensiblement plan, s'étendant verticalement et adapté pour servir d'appui à la face interne de la pièce de viande, et qu'il est équipé d'organes de bridage aptes à venir se loger à l'intérieur de la cavité thoracique de la pièce de viande, et à s'appliquer avec un certain serrage contre la paroi interne de cette cavité.

Par ailleurs, selon un certain nombre de caractéristiques avantageuses (mais non limitatives) :
- lesdits organes de bridage comprennent une paire de sabots mobiles, des moyens étant prévus pour les déplacer horizontalement, dans un plan parallèle au plan général contenant ledit support, de manière à les écarter ou les rapprocher l'un de l'autre, de façon que l'un de ces sabots vienne s'appliquer dans la région de jonction des vertèbres et des côtes, et l'autre dans la zone cartilagineuse reliant les côtes au sternum, afin de réaliser le bridage de la pièce par rapport au support ;
- les deux sabots sont identiques et présentent chacun un bord lisse conformé pour venir en appui dans ladite région de jonction vertèbres-côtes, et un bord opposé garni de dents qui sont adaptées pour pénétrer dans ladite zone cartilagineuse reliant les côtes au sternum, et il est possible de faire pivoter ces sabots de 180° de manière à adapter le dispositif indifféremment au bridage de pièces droites ou gauches ;
- les organes de bridage sont montés sur un coulisseau qui est mobile transversalement par rapport au plan général du support, ce qui permet d'appliquer contre ce dernier la pièce bridée ;
- les organes de bridage sont portés par un châssis mobile verticalement par rapport au support, ce qui permet d'ajuster en hauteur ces organes de bridage afin de les adapter aux dimensions de la pièce de viande à laquelle on a affaire ;
- ledit support est suspendu à une poutraison, à proximité des moyens d'accrochage de la pièce de viande, et est articulé à cette poutraison autour d'un axe d'articulation horizontal parallèle au plan contenant le support, des moyens étant prévus qui permettent de faire pivoter ce dernier afin de l'écarter de la pièce de viande et d'autoriser la mise en place et l'évacuation de celle-ci au poste de désossage ;
- les moyens prévus pour déplacer les sabots, le coulisseau, ainsi que les moyens d'ajustage en hauteur du châssis et/ou les moyens prévus pour faire pivoter le support sont des vérins à double effet (pneumatiques, hydrauliques ou électriques).

D'autres caractéristiques et avantages de l'invention apparaîtront de la description et des dessins annexés qui en présentent un mode de réalisation préférentiel.

Sur ces dessins :
- les figures 1, 2 et 3 sont des vues générales schématiques du dispositif selon l'invention, respectivement vu de face, de côté et de dessus ;
- les figures 4 et 5 sont des vues simplifiées correspondant respectivement aux figures 1 et 2, sur lesquelles a été représentée une demi-carcasse de bovin destinée à être désossée au niveau de l'épaule ;
- la figure 6 est une vue de face à plus grande échelle des organes de bridage ;
- la figure 7 représente en vue de dessus les organes de bridage de la figure 6, ces organes étant appliquées à l'intérieur de la cavité thoracique de la demi-carcasse des figures 4 et 5 ;
- les figures 8 et 9 sont des vues de face schématiques, à échelle réduite, des organes de bridage déjà représentés à la figure 6, ces figures étant destinées à illustrer le principe de retournement de ces organes permettant leur adaptation à des pièces droites ou gauches ;
- les figures 10 et 11 sont des vues schématiques partielles de la demi-carcasse, destinées à illustrer les deux étapes principales de désossage de l'épaule.

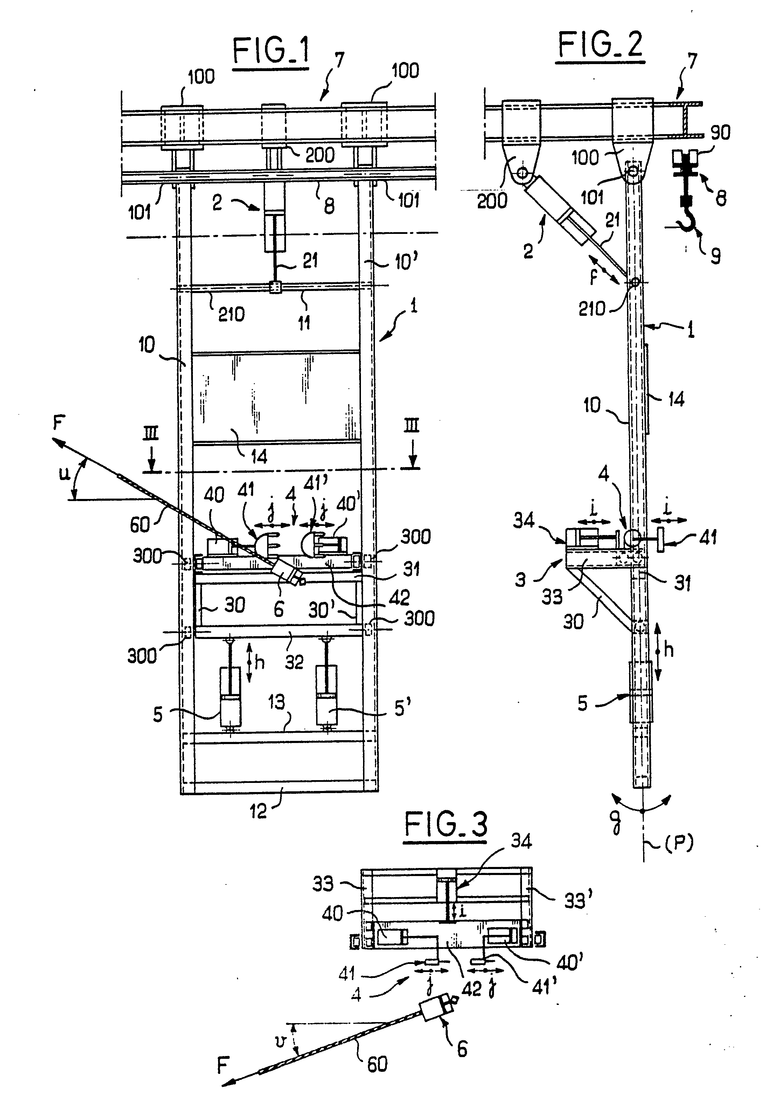

Le dispositif représenté aux figures 1 à 3 comprend un support métallique 1 ; celui-ci est un châssis en forme de cadre rectangulaire allongé, comprenant des longerons latéraux 10, 10' disposés parallèlement selon une direction verticale ; ces longerons sont reliés transversalement, de haut en bas, par une barre 11, une plaque 14, des tiges - ou traverses - 13 et 12. Les longerons latéraux 10, 10' sont des profilés de section en (U), et les côtés ouverts de ces deux longerons sont tournés vers l'intérieur du support 1, c'est-à-dire dirigés l'un vers l'autre. Ces longerons, ainsi que la barre 11, la plaque 14 et les tiges 12, 13 sont en métal, par exemple en acier inoxydable ; ces différents éléments sont assemblés les uns aux autres par des moyens appropriés, par exemple par soudage ou boulonnage.

Le châssis support 1 est pratiquement plan, et on a désigné par la référence (P) la plan fictif contenant ce support.

Le support 1 est suspendu à une poutraison 7 par l'intermédiaire de goussets 100 sur lequel il est articulé au moyen d'axes 101 horizontaux, contenus dans le plan (P). Un vérin à double effet 2, par exemple pneumatique, est également articulé sur un autre gousset 200 porté par la poutraison 7 ; l'extrémité libre de la tige 21 de ce vérin porte une bague formant palier d'articulation qui est emmanchée sur la barre 11. Comme on le comprend aisément à la simple observation de la figure 2, l'actionnement du vérin pneumatique 2 (double flèche (f)) permet de faire basculer l'ensemble du support 1 autour de l'axe 101 dans un sens ou dans l'autre (double flèche (g)).

La partie supérieure du support 1 est disposée à proximité d'une voie de roulement aérienne 8 sur laquelle circule, de manière bien connue, des crochets 9 pourvus de roulettes 90 servant au transport des pièces de viande. La voie de roulement est située du côté du support 1 opposé à celui où est situé le vérin 2 ; à la partie inférieure du support 1, est monté un chariot 3 mobile en hauteur ; ce chariot comprend deux rails latéraux 33, 33', disposés parallèlement l'un à l'autre dans le même plan horizontal, perpendiculairement au plan (P). Leur espacement est légèrement inférieur à l'écartement des deux traverses 10, 10' ; ils sont fixés à leur extrémité avant (au niveau du support 1) à une première traverse 31 ; le chariot 3 comprend une seconde traverse 32, située en-dessous de la traverse 31, et reliée par des barres obliques 30, 30' aux extrémités arrières des rails 33, 33' ; le chariot a ainsi la forme générale d'une console, qui est positionnée à l'intérieur du châssis 1 ; ce chariot est muni de quatre galets de roulement 300, qui circulent à l'intérieur des longerons en (U) 10, 10', ceux-ci jouant donc le rôle de rails de guidage du chariot. De manière analogue, les deux rails latéraux 33, 33' ont une section en (U)· dont les faces ouvertes sont tournées l'une vers l'autre ; ces rails servent au guidage d'un coulisseau horizontal 42, également munis de galets de roulement. Ce coulisseau peut donc se déplacer horizontalement, perpendiculairement au plan (P), tandis que l'ensemble chariot/coulisseau est mobile verticalement (parallèlement au plan (P)).

Le mouvement d'avant en arrière du coulisseau 42 (double flèche (i)) est assuré par un vérin à double effet 34, par exemple pneumatique, porté par le chariot 3 ; le mouvement de montée ou de descente (double flèche (h)) du chariot 3 est assuré par un jeu de deux vérins pneumatiques 5, 5' fixés à la tige transversale 13.

Le coulisseau 42 est muni d'un dispositif de bridage 4, qui comprend deux sabots 41, 41' qui peuvent tous deux être déplacés transversalement, dans un plan horizontal, parallèlement au plan (P) ; leur déplacement, figuré par les doubles flèches (j) aux figures 1 et 3, est commandé par des vérins pneumatiques à double effet 40, 40'.

Le dispositif est accessoirement équipé d'une pince de préhension 6 disposée à l'extrémité d'un câble de traction 60 (ou autre dispositif tel qu'un vérin pneumatique ou hydraulique). Des moyens d'actionnement et de guidage non représentés, extérieurs au support 1, et par exemple porté par la poutraison 7, permettent d'exercer sur le câble une force de traction (F) suivant une direction bien déterminée faisant un angle (u) avec l'horizontale et un angle (v) avec le plan (P) ; cette force est dirigée vers le haut, et l'angle (u) est voisin de 30° ; elle est également dirigée vers l'extérieur par rapport au support 1, et l'angle (v) est de l'ordre de 20°.

La pince 6 est une pince de type connu, par exemple à commande pneumatique ou hydraulique, dont les mors sont conformés pour saisir des parties de la pièce de viande, os, muscle et tendon.

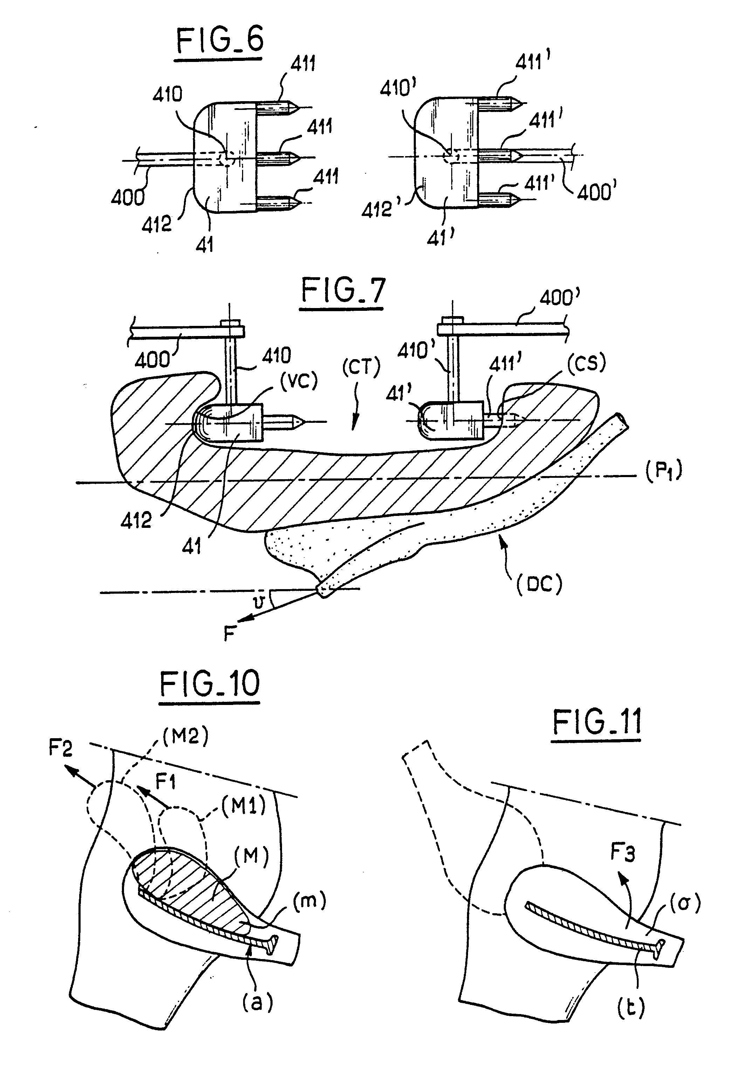

Sur les figures 6 et 7, on a désigné par les références 400, respectivement 400', les extrémités des tiges des vérins 40, 40' qui commandent le déplacement des sabots 41, 41'. Comme on le voit sur ces figures, les sabots 41, 41' sont identiques. Ces sabots sont constitués par une plaque métallique relativement épaisse, dont les grandes faces sont disposées verticalement, parallèlement au plan (P). L'un des bords latéraux 412, 412' a une forme convexe a angles arrondis, tandis que l'autre bord latéral est pourvu d'une série de dents 411, par exemple au nombre de trois. Ces dents sont par exemple des petites tiges à pointe conique qui s'étendent horizontalement au-dessus les unes des autres.

Selon une caractéristique intéressante de l'invention, les deux sabots 41, 41' sont articulés sur des axes 410, 410' portés par les tiges de vérin 400, respectivement 400' ; comme on le voit en comparant les figures 8 et 9, il est donc possible, en faisant pivoter les sabots 41, 41' de 180° (flèche (k) figure 9) de placer les parties dentées sur la gauche ou sur la droite du dispositif. Des moyens de type connu qui n'ont pas été représentés ici pour ne pas alourdir inutilement la description et les dessins sont prévus pour bloquer les sabots 41, 41' dans l'une ou l'autre de leurs positions représenté aux figures 8 et 9.

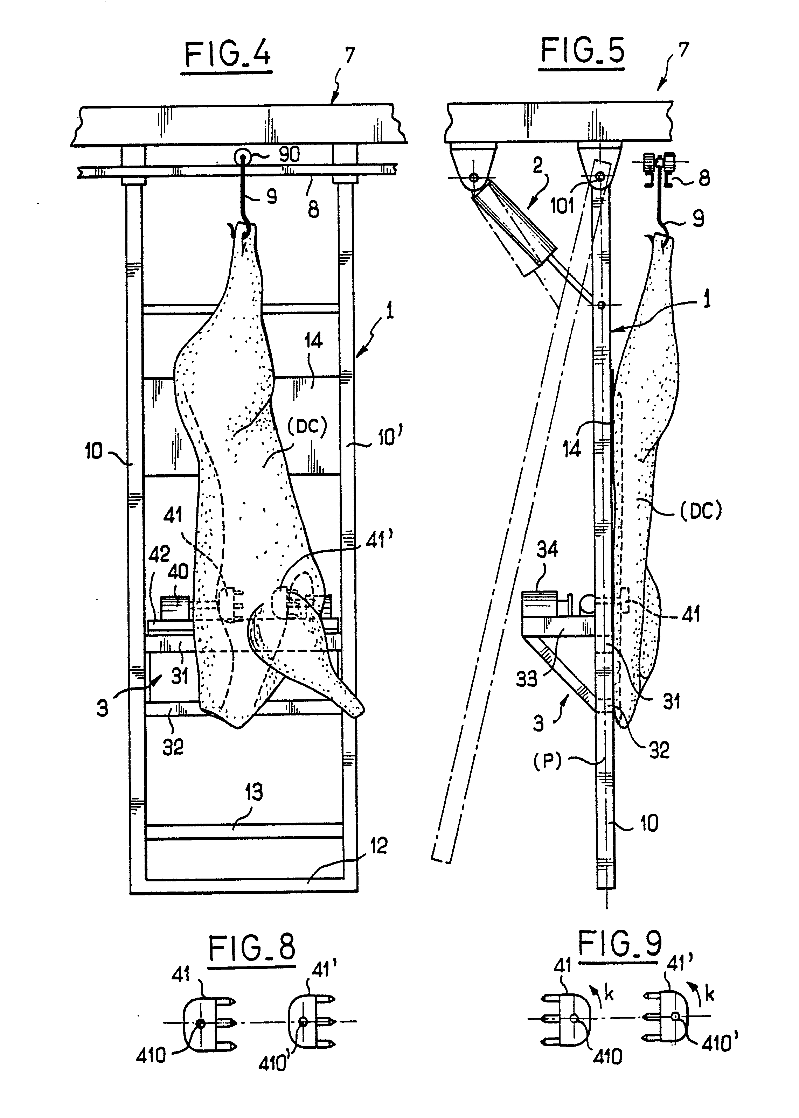

Nous allons maintenant expliquer, en nous référant plus particulièrement aux figures 4, 5, 7, 10 et 11, de quelle manière le dispositif qui vient d'être décrit est utilisé pour le désossage d'une demi-carcasse de bovin, et notamment pour le désossage de l'épaule.

On notera tout d'abord que l'opérateur attaché au poste de désossage dispose à portée de mains d'un pupitre de commande (non représenté), qui lui permet, en actionnant des pédales et/ou des manettes appropriées, de piloter les différents vérins 2, 5-5', 34, 40-40', ainsi que les mouvements de préhension (ouverture/fermeture) et de traction de la pince 6.

La demi-carcasse (DC), par exemple une demi-carcasse gauche, est amenée et positionnée au poste de travail, suspendue au crochet roulant 9. Ceci se fait automatiquement si le réseau aérien est un convoyé, manuellement dans le cas contraire. Le réseau aérien se trouve par rapport au sol à une hauteur telle que l'épaule de la demi-carcasse se présente pour un opérateur debout à une hauteur favorable au désossage, cette hauteur étant de préférence comprise entre 1m30 et 1m80.

Le chariot 3 a été préalablement réglé en hauteur, par actionnement des vérins 5, 5', pour tenir compte de la longueur de la pièce de viande, les traverses 31, 32 devant se trouver sensiblement au niveau de l'épaule.

Lors de la mise en place de la pièce de viande au poste de travail, le vérin 2 se trouve rétracté, de sorte que le support 1 est en position escamotée - représenté en traits mixtes à la figure 5 - et n'interfère pas avec la trajectoire de la demi-carcasse.

La demi-carcasse ayant été arrêtée en vis-à-vis du support 1, face interne tournée vers ce support, ce dernier est ramené dans sa position verticale normale (par extension du vérin 2). La carcasse vient alors prendre appui, par sa face interne contre la plaque 14 au niveau du jarret. La région de la demi-carcasse située au niveau de l'épaule se trouve en correspondance des traverses 31, 32, de sorte que tout mouvement de recul de cette demi-carcasse perpendiculairement au réseau aérien est interdit.

Au départ, les sabots 41, 41' se trouvent en position de rapprochement mutuel, les vérins 40, 40' étant en extension ; de plus ces sabots se trouvent dans l'orientation des figures 6 à 8.

Le vérin 34 est alors actionné, dans le sens de son extension, afin de déplacer le coulisseau 42 vers l'avant, en direction de la demi-carcasse, de manière à faire pénétrer les sabots à l'intérieur de la cavité thoracique (CT) de la demi-carcasse.

Les vérins 40, 40' sont ensuite actionnés dans le sens de leur rétraction, de façon à écarter l'un de l'autre les sabots 41, 41'. Le bord lisse 412 du sabot 41 vient en appui dans la cavité (VC) formée par le demi-corps vertébral au niveau de la jonction des vertèbres avec les côtes ; la surface de contact doit être lisse pour ne pas détériorer la viande. De l'autre côté, la denture 411' du sabot 41 pénètre dans la zone cartilagineuse (CS) reliant les côtes au sternum.

La demi-carcasse se trouve donc tenue de l'intérieur, au niveau de la cage thoracique, par les deux sabots 41, 41'.

Enfin, le vérin 34 est rétracté de manière à faire reculer en bloc le coulisseau 42 et les deux sabots 41, 41' montés sur celui-ci, ce qui a pour effet de faire reculer la demi-carcasse et de l'appliquer fermement contre les traverses 31, 32. La pièce de viande se trouve par conséquent parfaitement bridée et immobilisée contre le support 1 au niveau de la cage thoracique.

Le mode opératoire pour le désossage de l'épaule, par une méthode de travail permettant d'obtenir des pièces de découpe identiques à celles obtenues en découpes françaises traditionnelles, est le suivant.

A l'aide de son couteau, l'opérateur va successivement effectuer le traçage de la griffe, la levée du jumeau, le traçage le long de l'apophyse de l'omoplate, le dégagement de l'extrémité de la macreuse au droit du coude, et le traçage au couteau de la partie supérieure de la macreuse.

De préférence, il effectue un bridage supplémentaire de la demi-carcasse contre le support 1 au niveau du jarret ; ce bridage est effectué par des moyens traditionnels qui n'ont pas été représentés car ils ne font pas à proprement parler partie de l'invention ; ces moyens peuvent comprendre un crochet ou une pince à commande mécanique, pneumatique ou hydraulique.

L'opérateur effectue ensuite la levée du paleron et de la macreuse par traction à la figure 10, on a représenté par la référence (a) l'apophyse de l'omoplate, par (M) la macreuse, qui est une pièce de viande fixée sur la partie supérieure de l'omoplate ; la pince 6 est équipée de mors de forme spéciale qui permettent la préhension de l'aponévrose de la macreuse et de la tête d'omoplate. Pour la levée de la macreuse, ces mors sont fixés à l'aponévrose située à l'extrémité antérieure de la macreuse dont l'emplacement est désigné (m). Au moyen du câble 60, la traction est effectuée progressivement, avec la double inclinaison selon les angles (u) et (v) dont il a été fait état plus haut. On a désigné par $(M_1)$ la macreuse en cours de traction (flèche $(F_1)$) et par $(M_2)$ la macreuse en fin de levée (traction $(F_2)$).

Ensuite l'opérateur dégage au couteau l'articulation omoplate-humérus (tête d'omoplate), ceci après avoir levé le jarret de façon traditionnelle.

Toujours grâce à la pince 6, il procède ensuite à la levée de l'omoplate par traction. A cet effet il accroche les mors à la tête (t) de l'omoplate (o) (voir figure 11) ; l'omoplate se retourne au cours de la traction, laquelle est figurée par la flèche $(F_3)$ ; la position de l'omoplate à la fin de la traction est figurée en traits interrompus.

Enfin, l'opérateur lève au couteau le dessus de palette.

Il est avantageusement prévu à proximité immédiate de la zone de travail de l'opérateur deux tapis roulants destinés à recevoir et évacuer d'une part les os, d'autre part les morceaux de viande.

Lorsque l'opération de désossage est terminée, l'opérateur actionne les différents vérins pour retirer les sabots 41, 41' de la cavité thoracique de la demi-carcasse, provoque l'escamotage du support, de sorte que la demi-carcasse peut être acheminée au poste suivant et une nouvelle carcasse est amenée au poste de travail.

Comme cela a déjà été dit plus haut, les sabots 41, 41' peuvent être aussi bien utilisés pour des demi-carcasses gauches que des demi-carcasses droites ; il suffit pour cela de les faire pivoter à 180°.

Le procédé et le dispositif qui viennent d'être décrits peuvent également s'appliquer à un quartier avant au lieu d'une demi-carcasse ; dans ce cas le support utilisé peut avoir une longueur plus faible.

**Revendications**

1. Procédé de maintien d'une pièce brute de viande de boucherie telle qu'une demi-carcasse ou un quartier avant, au cours du désossage de cette pièce "en suspendu", selon lequel on bride ladite pièce - sensiblement au même niveau que celui où s'effectue le désossage - contre un support fixe - au moyen d'organes de bridage qui sont placés à l'intérieur de sa cavité thoracique, ces organes s'appliquant avec un certain serrage contre la paroi interne de cette cavité.

2. Procédé selon la revendication 1, caractérisé en ce que lesdits organes de bridage viennent s'appliquer d'une part dans la région de la jonction vertèbres-côtes, d'autre part dans la zone cartilagineuse reliant les côtes au sternum, en y pénétrant.

3. Procédé selon l'une des revendications 1 ou 2, appliqué au désossage de l'épaule d'un gros bovin, caractérisé en ce que le désossage - qui se fait manuellement à l'aide d'un couteau - est assisté mécaniquement au moyen d'une pince exerçant des tractions successivement sur l'ensemble paleron-macreuse et sur l'omoplate.

4. Procédé selon la revendication 3, caractérisé en ce que la demi-carcasse ou le quartier de gros bovin étant suspendu à sa partie arrière, et maintenu sensiblement en position verticale, les tractions mécaniques sont exercées du côté opposé à celui du membre avant, selon une ligne de force, qui est dirigée d'une part vers le haut en formant un angle de l'ordre de 30° avec l'horizontale, d'autre part vers l'extérieur en formant un angle de l'ordre de 20° avec le plan vertical général de la demi-carcasse ou du quartier.

5. Dispositif de maintien d'une pièce de viande de boucherie telle qu'une demi-carcasse ou un quartier avant en vue de son désossage "en suspendu", qui comporte un support en forme de châssis allongé, sensiblement plan, s'étendant verticalement et adapté pour servir d'appui à la face interne de la pièce, caractérisé en ce que ledit support (1) est équipé d'organes de bridage (4) aptes à venir se loger à l'intérieur de la cavité thoracique (TC) de la pièce (DC) et à s'appliquer avec un certain serrage contre la paroi interne de cette cavité.

6. Dispositif selon la revendication 5, caractérisé en ce que lesdits organes de bridage (4) comprennent une paire de sabots mobiles (41, 41'), des moyens (40, 40') étant prévus pour les déplacer horizontalement, dans un plan parallèle au plan général (P) dudit support (1), de manière à les écarter ou les rapprocher l'un de l'autre, de façon que l'un (41) de ces sabots vienne s'appliquer dans la région (VC) de jonction des vertèbres et des côtes, et l'autre (41') dans la zone cartilagineuse (CS) reliant la côte au sternum, afin de réaliser le bridage de la pièce (DC) par rapport au support (1).

7. Dispositif selon la revendication 6, caractérisé en ce que les deux sabots (41, 41') sont identiques et présentent chacun un bord lisse (412) conformé pour venir en appui dans ladite région (VC) de jonction vertèbres-côtes et un bord opposé garni de dents (412) adaptées pour pénétrer dans ladite zone cartilagineuse (CS) reliant les côtes au sternum, et qu'il est possible de faire pivoter ces sabots de 180° de manière à adapter le dispositif indifféremment au bridage de pièces droites ou gauches.

8. Dispositif selon l'une des revendications 5 à 7, caractérisé en ce que les organes de bridage (4) sont montés sur un coulisseau (42) qui est mobile transversalement par rapport au plan général (P) du support (1) ce qui permet d'appliquer contre ce dernier la pièce bridée (DC).

9. Dispositif selon l'une des revendications 5 à 8, caractérisé en ce que les organes de bridage (4) sont portés par un châssis (3) mobile verticalement par rapport au support (1), ce qui permet son ajustage en hauteur.

10. Dispositif selon l'une des revendications 5 à 9, caractérisé en ce que ledit support (1) est suspendu à une poutraison (7), à proximité des moyens (8, 9) d'accrochage de la pièce (DC), et est articulé à cette poutraison (7) autour d'un axe d'articulation horizontal (101) parallèle au plan (P) du support (1), des moyens (2) étant prévus qui permettent de faire pivoter ce dernier afin de l'écarter de la pièce (DC) et d'autoriser la mise en place et l'évacuation de celle-ci au poste de désossage.

11. Dispositif selon l'une des revendications 5 à 10, caractérisé en ce que· les moyens (40, 40') prévus pour déplacer les sabots (41, 41'), les moyens (34) prévus pour déplacer le coulisseau (42), les moyens d'ajustage en hauteur du châssis (3) et/ou les moyens (2) prévus pour faire pivoter le support (1) sont des vérins à double effet.

FIG_1

FIG_2

FIG_3

EP 0 365 452 A1

# FIG_4

# FIG_5

# FIG_8

# FIG_9

## FIG_6

411
410
411
411
400
412
41

411'
410'
411'
411'
400'
412'
41'

## FIG_7

400'
410
(VC)
(CT)
410'
411'
(CS)
400'
(P₁)
412
41
41'
(DC)
υ
F

## FIG_10

F2
(M2)
F1
(M1)
(M)
(m)
(a)

## FIG_11

F3
(σ)
(t)

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-121477 (CHIRON)<br>* page 8, ligne 3 - page 8, ligne 20 *<br>* page 9, ligne 12 - page 10, ligne 18 *<br>* page 11, ligne 5 - page 11, ligne 8 *<br>--- | 1, 5, 6, 9 | A22C17/02 |
| A | FR-A-1574416 (INGENIORFIRMA VEKAKONSTRUKSJONER)<br>* page 2, ligne 26 - page 3, ligne 25 *<br>--- | 1, 11 | |
| A | EP-A-247763 (LEINING)<br>* page 8, ligne 21 - page 12, ligne 21 *<br>--- | 1, 5 | |
| A | FR-A-2598887 (S.O.C.O.F.)<br>* le document en entier *<br>--- | 3, 10 | |
| A | FR-A-2581512 (SOCIETE DES VIANDES DU COTENTIN)<br>* le document en entier *<br>--- | 3 | |
| A | FR-A-1517853 (LEBAUD)<br>--- | | |
| A | US-A-4651384 (KORHONEN)<br>--- | | |
| A | EP-A-213015 (CABY)<br>--- | | DOMAINES TECHNIQUES RECHERCHES (Int. Cl.5) |
| A | EP-A-245183 (DURAND)<br>--- | | A22C<br>A22B |
| A | US-A-4322873 (LUNN)<br>--- | | |
| A | FR-A-2428979 (KORHONEN)<br>----- | | |

Le présent rapport a été établi pour toutes les revendications

| Lieu de la recherche | Date d'achèvement de la recherche | Examinateur |
|---|---|---|
| LA HAYE | 17 JANVIER 1990 | DE LAMEILLIEURE D. |

CATEGORIE DES DOCUMENTS CITES

X : particulièrement pertinent à lui seul
Y : particulièrement pertinent en combinaison avec un autre document de la même catégorie
A : arrière-plan technologique
Q : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P0402)